# EUROPEAN PATENT APPLICATION

(11) **EP 3 970 911 A1**
(43) Date of publication of application: **23.03.2022**
(21) Application number: 20827334.2
(22) Date of filing: 09.06.2020
(51) Int. Cl.: B23Q 11/00, B23Q 11/08, B23Q 17/00

(54) **MACHINE TOOL**

(30) Priority: 17.06.2019 JP 2019111833
(71) Applicant: DMG Mori Co., Ltd., Yamatokoriyama-shi, Nara 639-1160 (JP)
(72) Inventor: NAKATSUKASA, Yosuke, Yamatokoriyama-shi, Nara 639-1160 (JP); YAMANE, Masahiro, Yamatokoriyama-shi, Nara 639-1160 (JP)
(74) Representative: Isarpatent
(86) International application number: PCT/JP2020/022727
(87) International publication number: WO 2020/255803

(57) **Abstract**

There is provided a machine tool comprising: a moving cover 4 that opens or closes a machining chamber M; a blowout unit including a blowout port 42 that releases gas so as to cover an opening region Op generated when the moving cover 4 is moved from a closed position toward an open position; and a control unit that changes an amount of the gas released from the blowout port 42 according to an opening degree L of the opening region Op.

## Description

### Technical Field

The present disclosure relates to a machine tool that releases a coolant into a machining chamber.

### Background Art

In a machine tool, in many cases, a coolant (cutting liquid) is released into a machining chamber for suppressing friction in cutting, cooling, and the like. In such a machine tool, there is a machine tool provided with a moving cover that closes a machining chamber in order to prevent scattering of a mist of a coolant, and opens and closes the closed machining chamber for taking in and out a workpiece or for inspection. Among machine tools including a moving cover, there has been proposed a machine tool that releases air when the moving cover is opened to form an air curtain so as to cover an opening region, thereby preventing scattering of a mist to the outside (see Patent Literature 1).

### Citation List

### Patent Literature

Patent Literature 1: JP H06-36742 U

### Summary of Invention

### Technical Problem

However, in the machine tool described in Patent Literature 1, air is always released at the maximum output when the moving cover is opened. Therefore, even when the workpiece can be replaced only by slightly opening the moving cover, air needs to be released at the maximum output. Therefore, energy consumption required for driving for releasing air also increases.

An object of the present disclosure is to provide a machine tool capable of reducing scattering of a mist of a coolant to the outside with small energy consumption.

### Solution to Problem

In order to solve the above problem, provided is a machine tool according to CLAIMS.

### Advantageous Effects of Invention

According to this, it is possible to provide the machine tool capable of reducing scattering of a mist of a coolant to the outside of the machine tool with small energy consumption. Brief Description of Drawings

FIG. 1 is a perspective view schematically illustrating a machine tool according to one embodiment of the present disclosure.
FIG. 2A illustrates an A-A cross section of FIG. 1A, and particularly, is a plan cross-sectional view illustrating a case where a moving cover is at an open position.
FIG. 2B illustrates an A-A cross section of FIG. 1A, and particularly, is a plan cross-sectional view illustrating a case where the moving cover is at a closed position.
FIG. 3A is a line diagram schematically illustrating a configuration of a blowout unit and an intake unit in the machine tool according to one embodiment.
FIG. 3B is a diagram illustrating a portion corresponding to the blowout unit extracted from the configuration illustrated in FIG. 3A.
FIG. 3C is a diagram illustrating a portion corresponding to the intake unit extracted from the configuration illustrated in FIG. 3A.
FIG. 4 is a block diagram illustrating an example of a control unit of the machine tool including an air curtain control unit.

### Description of Embodiments

Hereinafter, embodiments for carrying out the present disclosure will be described with reference to the drawings. The embodiments described below are intended to embody the technical idea of the present disclosure, and the present disclosure is not limited to the following unless otherwise specified.

In the drawings, members having the same function may be denoted by the same reference numerals. The same operation and effect by the same configuration will not be sequentially mentioned. The sizes, positional relationships, and the like of the members illustrated in the drawings may be exaggerated for clarity of description.

In the drawings, an X axis, a Y axis, and a Z axis are illustrated.

### (Machine Tool According to One Embodiment)

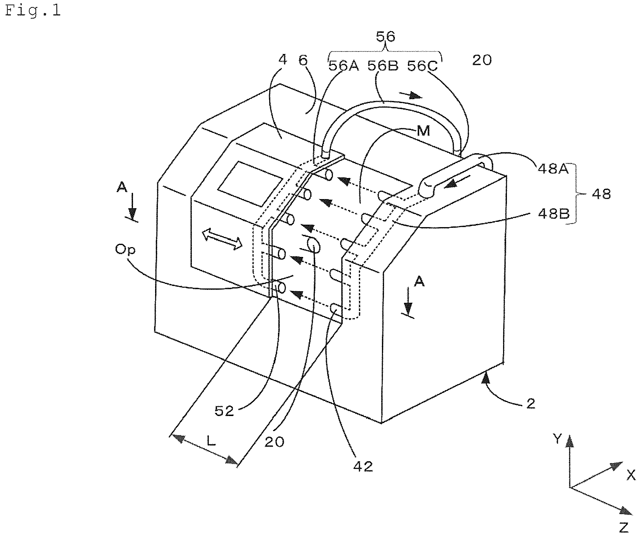

First, an outline of a machine tool according to one embodiment will be described with reference to FIG. 1. FIG. 1 is a perspective view schematically illustrating the machine tool according to one embodiment.

In the machine tool, generally, a coolant (cutting liquid) is released into a machining chamber for suppressing friction, cooling, or the like at the time of cutting a workpiece. In addition, in order to prevent scattering of a mist of the released coolant, the machining chamber is closed during cutting. Further, a moving cover that is opened and closed to expose the closed machining chamber for taking in and out a workpiece and for inspection is provided.

In the present embodiment, a machining chamber M is closed by a moving cover 4 and a fixing cover 6, and the machining chamber is exposed by moving one moving cover 4 in the closed machining chamber M. In the machining chamber M, a machine tool body portion and a coolant release unit 20 for releasing a coolant are disposed. The moving cover 4 is movable between an open position where an opening region Op where the machining chamber M is exposed is present and a closed position where the opening region Op is closed. When the moving cover 4 is moved to the minus side of the Z axis which is the horizontal direction, the opening region Op where the machining chamber M is exposed is formed. The open position is not a single point, and the moving cover 4 can be moved to any position between a closed position and a fully open position at which the moving cover 4 is moved to the most minus side of the X axis to be stopped. That is, the moving cover can be stopped at the intermediate position. The size of the opening region Op can be set to a desired size according to the workpiece to be taken in and out or the application. The opening region Op can be said to be a region that is not covered by the moving cover 4 at the open position in the opening provided in the fixing cover 6 covered by the moving cover 4 in the closed state.

In the present embodiment, blowout ports 42 that release gas so as to cover the opening region Op generated when the moving cover 4 is moved from the closed position toward the open position are provided. Although air is used as the gas here, an inert gas, a nitrogen gas, or the like can also be used depending on the application. The blowout ports 42 are disposed at the opening end portion of the fixing cover 6 corresponding to the end portion of the opening region Op on the plus side of the Z axis. Furthermore, intake ports 52 for sucking gas (see dotted arrows in FIG. 1) released from the blowout ports 42 are provided. The intake ports 52 are disposed at the end portion of the moving cover 4 corresponding to the end portion of the opening region Op on the minus side of the Z axis. In the present embodiment, five blowout ports 42 are disposed in the vertical direction of the opening region Op, and five intake ports 52 are disposed at positions facing the respective blowout ports 42. Here, the blowout ports 42 and the intake ports 52 each include a pipe portion branched from a header pipe and an opening portion at a tip thereof.

For more details, the blowout ports 42 and the intake ports 52 will be described. Gas discharged from a gas supply means including a fan or the like flows through a blowout-side gas flow path 48 including a connection pipe 48A and a header pipe 48B and is released from the blowout ports 42 (see solid and broken arrows).

The gas blown out from the blowout ports 42 is sucked into the intake ports 52 corresponding to the respective blowout ports 42 by suction force of a gas intake means including a fan or the like. The sucked gas flows through an intake-side gas flow path 56 including a header pipe 56A, a hose 56B, and a connection pipe 56C, reaches a gas intake means (not shown), and is released to the atmosphere (see solid and broken arrows). The hose 56B is used to absorb the moving distance of the moving cover 4.

An air curtain is formed by the flow of the gas from the blowout ports 42 to the intake ports 52, and it is possible to reduce the outflow of the mist of the coolant from the opening region Op to the outside. In particular, since the intake ports 52 that suck the gas released from the blowout ports 42 are provided, the sealing effect by the air curtain can be further enhanced.

In the present embodiment, the flow rate of the gas released from the blowout ports 42 can be changed by an opening width L of the opening region Op by the moving cover 4, that is, the opening degree of the opening region Op.

As a result, it is not always necessary to release the gas at the maximum output, and energy saving of the machine tool 2 can be realized. When the width (opening degree) L of the opening region Op is small, the flow rate of the gas can be reduced, and when the width (opening degree) L of the opening region Op is large, the flow rate of the gas can be increased. This makes it possible to efficiently reduce the release of the mist of the coolant to the outside of the device. Therefore, it is possible to suppress scattering of the mist of the coolant to the outside with small energy consumption.

The opening degree indicates the degree of the opened region, and can be expressed not only by the opening width L of the opening region Op but also by the degree of the area of the opened region.

In the present embodiment, the connection pipe 48A of the blowout-side gas flow path 48 extends upward from the gas supply means (fan), extends along the upper surface of the fixing cover 6, and is connected to the header pipe 48B inside the fixing cover 6. As described above, since at least a part of the blowout-side gas flow path 48 is disposed above the machine tool 2, efficient arrangement with less interference with the machine tool body portion can be realized.

Also in the intake-side gas flow path 56, the hose 56B connecting the header pipe 56A and the connection pipe 56C is disposed above the machine tool 2. Although the hose 56B is moved by movement of the moving cover 4, since the hose 56B is disposed above the machine tool 2, interference with other members can be avoided.

### (Internal Space Surrounded by Moving Cover 4 and Fixing Cover 6)

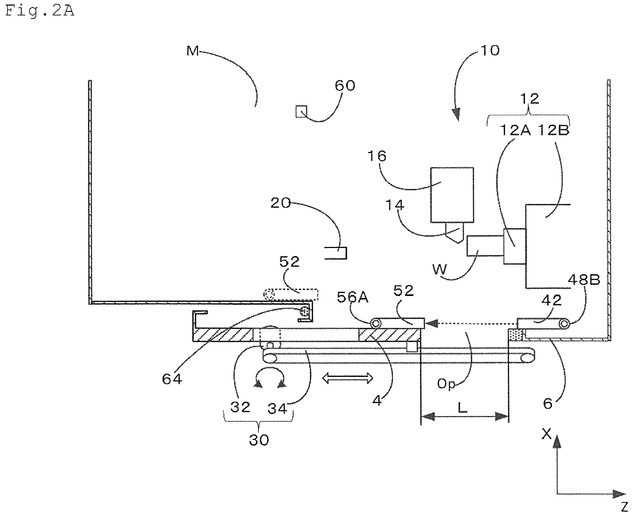

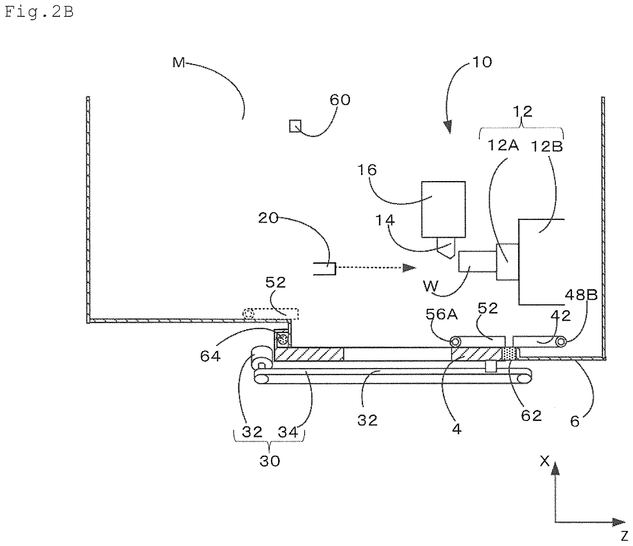

Next, the inside of the space surrounded by the moving cover 4 and the fixing cover 6 will be described in more detail with reference to FIGS. 2A and 2B. FIG. 2A illustrates an A-A cross section of FIG. 1A, and particularly, is a plan cross-sectional view illustrating a case where the moving cover is at the open position. FIG. 2B illustrates an A-A cross section of FIG. 1A, and particularly, is a plan cross-sectional view illustrating a case where the moving cover is at the closed position.

The machine tool body portion 10 and the machining chamber M are surrounded by the moving cover 4 and the fixing cover 6. As the machine tool body portion 10, any machining device, machining center, or turning center or the like that performs rolling or turning can be used. In the drawings, an example of the machine tool body portion 10 in a case where turning is performed is illustrated. Specifically, as the machine tool body portion 10, a workpiece holding unit 12 including a chuck 12A that detachably holds the workpiece W and a chuck fixing portion 12B to which the chuck 12A is attached, and a turret 16 to which a plurality of tools 14 are attached are illustrated.

In addition, a sensor 60 for detecting a state of the mist in the machining chamber is provided in the machining chamber M surrounded by the moving cover 4 and the fixing cover 6.

The moving cover 4 is movable in a plus direction and a minus direction of the Z axis. At the closed position illustrated in FIG. 2B, the end portion of the moving cover 4 on the plus side in the Z axis direction and the opening end portion of the fixing cover 6 corresponding thereto are sealed by a seal member (packing) 62 made of an elastic material. Similarly, the end portion of the moving cover 4 on the minus side in the Z axis direction and the opening end portion of the fixing cover 6 corresponding thereto are sealed by a seal member (O-ring) 64 made of an elastic material. As a material of the seal members 62 and 64, any known elastic material for a seal member including various rubbers and elastomers can be used.

The sealing method is not limited thereto, and any known sealing means including a labyrinth sealing mechanism can be adopted. In FIG. 1, the seal member (packing) 62 is not illustrated in order to clearly illustrate the blowout ports 42.

When the moving cover 4 is moved from the closed position illustrated in FIG. 2B to the minus side in the Z axis direction, the opening region Op is generated in the machining chamber M as illustrated in FIG. 2A. The size of the opening region Op can be set to any size up to the maximum opening position according to the size of the workpiece to be taken in and out or a space required for inspection. FIG. 2A illustrates a state in the middle of opening and closing of the moving cover 4, and the moving cover 4 may be moved in either the plus or minus direction in the X axis direction (see a white arrow in FIG. 2A).

In the present embodiment, a servomotor 32 is provided in a moving mechanism 30 that moves the moving cover 4. In the present embodiment, the moving mechanism 30 includes a belt mechanism 34 that is moved by a driving force of the servomotor 32. A lower portion of the moving cover 4 is engaged with a belt of the belt mechanism 34, and the belt mechanism 34 is moved based on rotation of a drive shaft of the servomotor 32, and accordingly, the moving cover 4 is moved in the plus direction or the minus direction of the Z axis.

In the present embodiment, since the moving cover 4 is moved by the servomotor 32, a control unit of the machine tool 2 can move the moving cover 4 with high positional accuracy and can accurately grasp the opening width (opening degree) L of the opening region Op.

The moving mechanism is not limited thereto, and any other moving mechanism including a moving mechanism including a ball screw driven by the servomotor 32 and a moving mechanism including a rack and a pinion driven by the servomotor 32 can be used.

The blowout ports 42 are attached to the opening end portion of the fixing cover 6 corresponding to the end portion of the opening region Op on the plus side in the Z axis direction. The intake ports 52 are attached to the end portion of the moving cover 4 corresponding to the end portion of the opening region Op on the minus side in the Z axis direction, which is positions facing the blowout ports 42. The positions of the blowout ports 42 and the intake ports 52 can be reversed, so that the blowout ports 42 can be attached to the moving cover 4 side, and the intake ports 52 can be attached to the fixing cover 6 side.

As described above, by attaching one of the blowout ports 42 and the intake ports 52 to the fixing cover 6 and attaching the other to the moving cover 4, the blowout ports 42 and the intake ports 52 can be disposed at the shortest distance in accordance with the opening width (opening degree) L of the opening region Op, so that the efficiency as an air curtain can be enhanced.

As illustrated in a dotted outline, the intake ports 52 can be disposed at the opening end portion of the fixing cover 6 on the minus side in the Z axis direction of the opening region Op. That is, there may be a case where the blowout ports 42 and the intake ports 52 are not attached to the moving cover 4 but are attached to the fixing cover 6 side. In this case, since all the members can be disposed on the fixing side, it is not necessary to use a hose or the like for absorbing the moving distance of the moving cover 4, and a simple and highly reliable structure can be obtained.

### (Blowout Unit and Intake Unit)

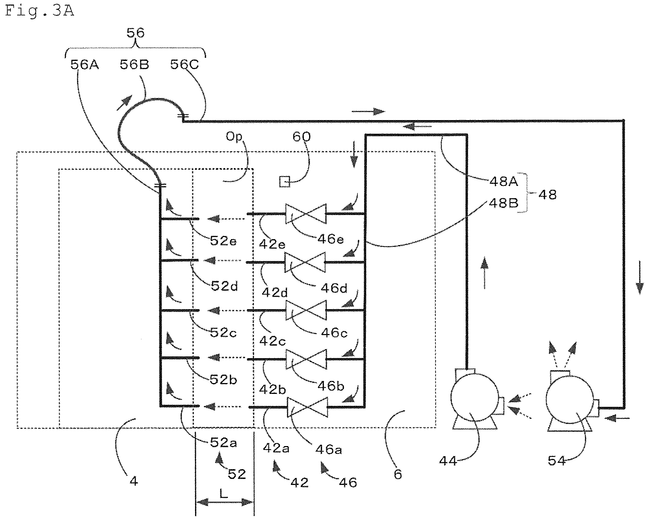

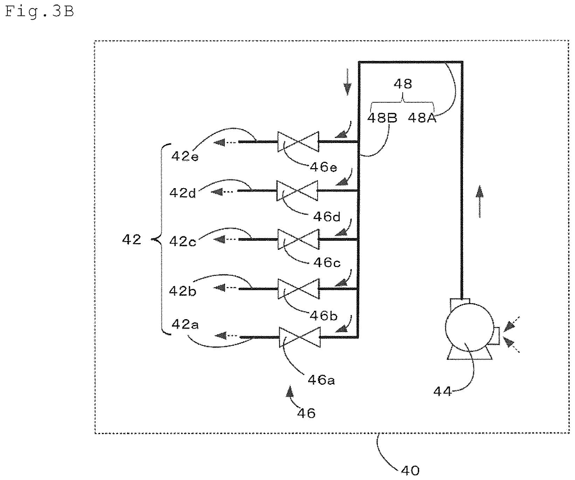

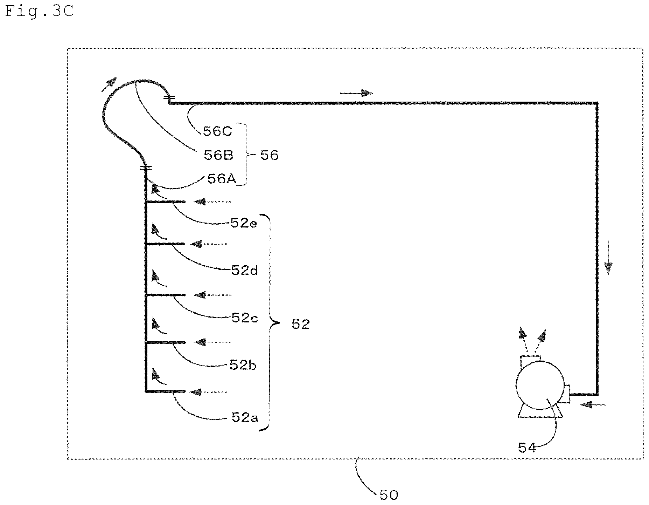

Next, a blowout unit 40 and an intake unit 50 will be described in more detail with reference to FIGS. 3A to 3C. FIG. 3A is a line diagram schematically illustrating a configuration of the blowout unit and the intake unit in the machine tool according to one embodiment. FIG. 3B is a diagram illustrating a portion corresponding to the blowout unit extracted from the configuration illustrated in FIG. 3A. FIG. 3C is a diagram illustrating a portion corresponding to the intake unit extracted from the configuration illustrated in FIG. 3A.

FIGS. 3A to 3C illustrate five flow rate adjusting valves 46a to 46e disposed on inlet sides of five blowout ports 42a to 42e, which have not been illustrated so far. As a result, the flow rate of the gas released from each of the blowout ports 42a to 42e can be changed.

As described above, the blowout unit 40 includes the plurality of blowout ports 42a to 42e, and the amount of the gas released for each of the blowout ports 42a to 42e can be changed by the flow rate adjusting valves 46a to 46e. Accordingly, the gas at the optimum flow rate can be released according to the position of the opening region Op, and the sealing effect of the air curtain can be enhanced.

The air which is obtained by sucking the atmosphere by the gas supply means (fan) 44 and is discharged flows through the blowout-side gas flow path 48 including the connection pipe 48A and the header pipe 48B to reach the flow rate adjusting valves 46a to 46e attached to the pipe branched from the header pipe 48B. The flow rate adjusting valves 46a to 46e change the opening degree of the valve by an actuator based on a signal from the control unit. As a result, the flow rate of the gas released from each of the blowout ports 42a to 42e can be changed.

The gas whose flow rate has been adjusted by each of the flow rate adjusting valves 46a to 46e is released from each of the blowout ports 42a to 42e, and is sucked into each of the intake ports 52a to 52e disposed to face the individual blowout ports 42a to 42e. The gas sucked through each of the intake ports 52a to 52e flows through the intake-side gas flow path 56 including the header pipe 56A, the hose 56B, and the connection pipe 56C, reaches a suction side of a gas intake means (fan) 54, and is released to the atmosphere.

### (Air Curtain Control Unit)

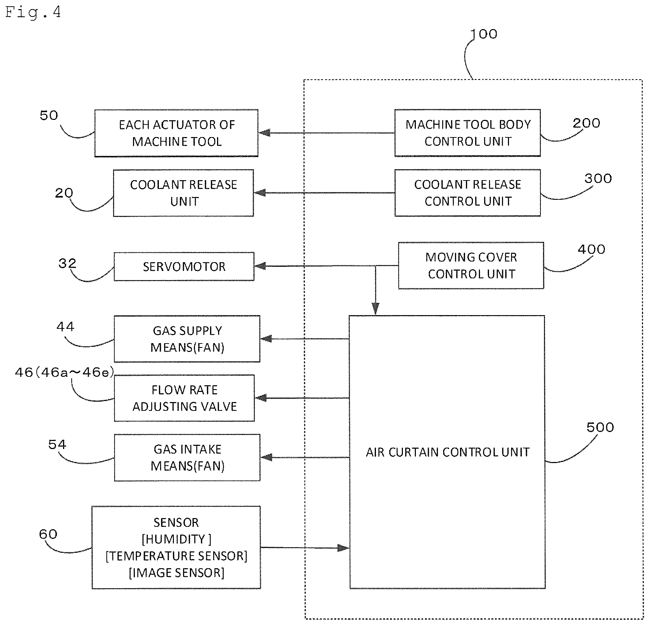

Next, an air curtain control unit that controls the blowout unit and the intake unit will be described with reference to FIG. 4. FIG. 4 is a block diagram illustrating an example of the control unit of the machine tool including the air curtain control unit.

In the example illustrated in FIG. 4, a case where an air curtain control unit 500 is included in the control unit 100 of the machine tool is illustrated. The control unit 100 includes a machine tool body control unit 200 that controls the machine tool body portion 10, a coolant release control unit 300 that controls the release of the coolant by the coolant release unit 20, a moving cover control unit 400 that controls the movement of the moving cover 4, and the air curtain control unit 500. However, not only the air curtain control unit 500 may be included in the control unit 100 of the machine tool, but also the air curtain control unit 500 may exist as an individual control device independent of the control unit 100 of the machine tool.

The machine tool body control unit 200 controls the machine tool body portion 10 by transmitting a control signal to each activator of the machine tool body portion 10. The coolant release control unit 300 transmits a control signal to a pump or a solenoid valve provided in the coolant release unit 20 to perform control to release the coolant at a predetermined release pressure. The moving cover control unit 400 transmits a control signal to the servomotor 32 included in the moving mechanism 30 of the moving cover 4 to control the movement of the moving cover 4.

At least a part of the control signal transmitted from the moving cover control unit 300 to the servomotor 32 is also transmitted to the air curtain control unit 500. Accordingly, the air curtain control unit 500 can grasp the opening width (opening degree) L of the opening region OP.

The air curtain control unit 500 can send a control signal to the gas supply means (fan) 44 of the blowout unit 40 to drive the gas supply means (fan) 44 and change the discharge amount of the gas of the gas supply means (fan) 44. In addition, the air curtain control unit 500 can send a control signal to each of the flow rate adjusting valves 46a to 46e to drive the actuator and adjust the flow rate.

Similarly, the air curtain control unit 500 can send a control signal to the gas supply means (fan) 44 of the blowout unit 40 to drive the gas intake means (fan) 54 and change the suction amount of the gas of the gas intake means (fan) 54.

### <Flow Rate Control at Height of Opening Region Op>

As an example of adjusting the flow rate of the gas released from each of the blowout ports 42a to 42e by the opening degree of each of the flow rate adjusting valves 46a to 46e, the following is considered. For example, the opening degree of each of the flow rate adjusting valves 46a to 46e can be controlled such that the amount of gas flowing through the upper region (plus side in the Y axis direction) of the opening region Op is larger than the amount of gas flowing through the lower region (minus side in the Y axis direction) of the opening region Op.

The mist of the coolant is generally lighter than air, and therefore tends to be directed upward. Therefore, the mist easily flows out from the upper region of the opening region Op. At this time, the mist lighter than air can be efficiently blocked by enhancing the blocking effect by the air curtain in the upper region of the opening region Op.

### <Flow Rate Control Based on Control Signal to Servomotor>

The flow rate of the gas released from each of the blowout ports 42a to 42e can be adjusted based on the control signal to the servomotor 32, that is, the signal related to the position of the moving cover 4 transmitted to the servomotor 32. The flow rate of the gas released from each of the blowout ports 42a to 42e can be changed by adjusting the discharge amount of the gas of the gas supply means (fan) 44 and the opening degree of each of the flow rate adjusting valves 46a to 46e.

The air curtain control unit 500 sends a control signal to each of the gas supply means (fan) 44 and the flow rate adjusting valves 46a to 46e based on the opening width (opening degree) L of the opening region OP obtained by the control signal to the servomotor 32 to control the flow rate of the gas released from each of the blowout ports 42a to 42e. In this case, the flow rate from each of the blowout ports 42a to 42e can be adjusted by proportional control with respect to the opening width (opening degree) L, or can be adjusted based on any other functions.

The flow rate of the gas sucked by each of the intake ports 52a to 52e can be adjusted according to the flow rate of the gas released from each of the blowout ports 42a to 42e, for example, the total amount of the released gas. The suction flow rate by each of the intake ports 52a to 52e can be realized by changing the suction amount of the gas of the gas intake means (fan) 54. Depending on the application, flow rate adjusting valves corresponding to the intake ports 52a to 52e can also be provided on the intake unit 50 side to more finely adjust the flow rate.

The amount of gas released from each of the blowout ports 42a to 42e can be accurately adjusted according to the opening width (opening degree) L of the opening region OP by the flow rate control based on the control signal to the servomotor 32, so that the mist can be effectively suppressed from flowing out from the opening region Op to the outside.

### <Flow Rate Control Based on Signal from Sensor>

The sensor 60 is disposed in the machining chamber M surrounded by the moving cover 4 and the fixing cover 6, and a detection signal from the sensor 60 is transmitted to the air curtain control unit 500. The air curtain control unit 500 can also control the flow rate of the gas released from each of the blowout ports 42a to 42e based on the signal transmitted from the sensor 60.

At this time, only the flow rate control based on the control signal to the servomotor may be performed, only the flow rate control based on the signal from the sensor described below may be performed, or both the flow rate control based on the control signal to the servomotor and the flow rate control based on the signal from the sensor may be performed in combination. For example, it is conceivable to change the flow rate of the gas based on the control signal to the servomotor, and then readjust the flow rate based on the detection data by the sensor.

Examples of the sensor 60 include a humidity sensor, a temperature sensor, and an image sensor.

### [Humidity Sensor]

The amount of mist of the coolant in the machining chamber M can be directly grasped by the sensor (humidity sensor) 60. When it is detected that the humidity in the machining chamber M is high, it can be considered that the amount of mist of the coolant is large, and the mist easily leaks to the outside. Therefore, the air curtain control unit 500 performs control processing of increasing the flow rate of the gas released from each of the blowout ports 42a to 42e. On the other hand, when it is detected that the humidity in the machining chamber M is low, it can be considered that the amount of mist of the coolant is small, and the mist is relatively less likely to leak to the outside. Therefore, the air curtain control unit 500 performs control processing of reducing the flow rate of the gas released from each of the blowout ports 42a to 42e.

As described above, the sensor (humidity sensor) 60 is disposed in the machining chamber M, and the air curtain control unit 500 performs control processing of changing the amount of gas released from each of the blowout ports 42a to 42e (blowout unit 40) according to the humidity in the machining chamber M detected by the sensor (humidity sensor) 60. By changing the amount of gas from each of the blowout ports 42a to 42e (blowout unit 40) according to the humidity in the machining chamber M, it is possible to more efficiently block the mist and to reduce energy consumption.

### [Image Sensor]

When an image in the machining chamber M is acquired by the sensor (image sensor) 60, the amount of mist of the coolant in the machining chamber M can be calculated by image processing. Therefore, also in the case of using the image sensor, the flow rate control similar to that in the case based on the signal from the humidity sensor can be performed.

### [Temperature Sensor]

When it is detected by the sensor (temperature sensor) 60 that the temperature in the machining chamber M is high, it can be considered that the gas containing the mist of the coolant expands and the mist easily leaks to the outside. Therefore, the air curtain control unit 500 performs control processing of increasing the flow rate of the gas released from each of the blowout ports 42a to 42e. On the other hand, when it is detected that the temperature in the machining chamber M is low, it can be considered that the mist is relatively less likely to leak to the outside. Therefore, the air curtain control unit 500 performs control processing of reducing the flow rate of the gas released from each of the blowout ports 42a to 42e.

### (Variation of Blowout Port)

In the above embodiment, the blowout ports 42a to 42e are fixed so as to release gas in the Z axis direction which is the moving direction of the moving cover 4, but the present invention is not limited thereto. For example, the orientation of each of the blowout ports 42a to 42e can be changed to change the direction in which the gas is released. As a result, it is also possible to adjust the releasing direction of the gas from each of the blowout ports 42a to 42e to obtain a uniform air sealing effect in the opening region Op.

### (Other Embodiments)

### <Blowout Unit 40>

In the above embodiment, the flow rate adjusting valves 46a to 46e are provided corresponding to the individual blowout ports 42a to 42e, but the present invention is not limited thereto. For example, the header pipe 48B can be divided into a first header pipe from which the blowout ports 42a to 42c are branched and a second header pipe from which the blowout ports 42d to 42e are branched, and a flow rate adjusting valve corresponding to each header pipe can be provided. As described above, by providing the flow rate adjusting valve for each of the plurality of blowout ports, the number of members can be reduced, and the burden on the control unit can be reduced.

Instead of the flow rate adjusting valve including an actuator, a manual flow rate adjusting valve can also be provided. Furthermore, there may be a case where one flow rate adjusting valve is provided for all the blowout ports 42a to 42c, or a case where no flow rate adjusting valve is provided at all. When the flow rate adjusting valve is not provided, the discharge amount of the gas from each of the air blowout ports 42a to 42c is adjusted by changing the discharge amount of the gas of the gas supply means (fan). Even when the flow rate adjusting valve is not provided, for example, by making the inner diameter of the blowout port located on the upper side larger than the inner diameter of the blowout port located on the lower side, the amount of gas flowing through the upper region of the opening region Op can be made larger than the amount of gas flowing through the lower region.

In the above description, the case where the five blowout ports 42a to 42c are provided has been described as an example, but the present invention is not limited thereto, and any number of blowout ports 42 can be provided in accordance with the size of the opening region Op, the generation state of the mist, and the like. For example, the blowout port may be one vertically long rectangular opening. In this case, even if the flow rate adjusting valve is provided as described above, since there is one opening, the flow rate of the air released from the opening per unit time can be changed, but it is difficult to adjust the release amount of the air released from the portion of the opening closest to the installation surface of the machine tool and the portion of the opening farthest from the installation surface of the machine tool toward the intake port. Therefore, as illustrated in FIG. 1, by disposing the connection pipe 48A in the upper portion of the machine tool and providing the vertically long header pipe 48B, the release amount of air from the portion located at the upper portion of the machine tool of one vertically long rectangular opening of the blowout port can be made larger than the release amount of air from the portion located at the lower portion of the machine tool. That is, since the connection pipe 48A is located at the upper portion, the air is released from the blowout port while flowing from the upper portion to the lower portion, so that the discharge amount of the air from the portion of the blowout port close to the connection pipe A increases, and the discharge amount of the air from the portion of the blowout port far from the connection pipe 48A decreases.

### <Intake Unit 50>

In the above embodiment, the intake unit 50 is provided, but the present invention is not limited thereto, and there may be a case where the intake unit 50 is not provided and only the blowout unit 40 is provided. In this case, the gas released from each of the blowout ports 42 is released to the atmosphere, but by changing the flow rate of the gas released from each of the blowout ports 42 by the opening width (opening degree) L of the opening region Op, it is possible to suppress scattering of the mist of the coolant to the outside with small energy consumption.

Although the embodiments and the aspects of the present disclosure have been described, the disclosure contents may be changed in details of the configurations, and combinations of elements, changes in order, and the like in the embodiments and the aspects can be realized without departing from the scope and spirit of the claimed present disclosure.

### Reference Signs List

- 2: machine tool
- 4: moving cover
- 6: fixing cover
- 10: machine tool body portion
- 12: workpiece holding unit
- 12A: chuck
- 12B: chuck fixing portion
- 14: tool
- 16: turret
- 20: coolant release unit
- 30: moving mechanism
- 32: servomotor
- 34: belt mechanism
- 40: blowout unit
- 42, 42a to 42e: blowout port
- 44: gas supply means (fan)
- 46, 46a to 45e: flow rate adjusting valve
- 48: blowout-side gas flow path
- 48A: connection pipe
- 48B: header pipe
- 50: intake unit
- 52, 52a to 52e: intake port
- 54: gas intake means (fan)
- 56: intake-side gas flow path
- 56A: header pipe
- 56B: hose
- 56C: connection pipe
- 60: sensor
- 62: seal member (packing)
- 64: seal member (O-ring)
- 100: control unit
- 200: machine tool body control unit
- 300: coolant release control unit
- 400: moving cover control unit
- 500: air curtain control unit
- M: machining chamber
- Op: opening region
- L: opening width

## Claims

1. A machine tool comprising:
a moving cover that opens or closes a machining chamber;
a blowout unit including a blowout port that releases gas so as to cover an opening region generated when the moving cover is moved from a closed position toward an open position; and
a control unit that changes an amount of the gas released from the blowout port according to an opening degree of the opening region.

2. The machine tool according to claim 1, further comprising an intake unit including an intake port that takes in the gas released from the blowout port.

3. The machine tool according to claim 2, further comprising a fixing cover that covers the machining chamber,
wherein one of the blowout port and the intake port is attached to the fixing cover, and the other of the blowout port and the intake port is attached to the moving cover.

4. The machine tool according to claim 2 or 3,
wherein the blowout unit includes a gas supply means and a blowout-side gas flow path connecting the blowout port and the gas supply means,
wherein the intake unit includes a gas intake means and an intake-side gas flow path connecting the intake port and the gas intake means, and
wherein at least a part of the blowout-side gas flow path is disposed above the machine tool.

5. The machine tool according to any one of claims 1 to 4,
wherein the blowout unit includes a plurality of the blowout ports, and
wherein the control unit changes an amount of the gas released for each of the blowout ports.

6. The machine tool according to any one of claims 1 to 5,
wherein the moving cover is moved in a horizontal direction, and
wherein an amount of the gas flowing through an upper region of the opening region is larger than an amount of the gas flowing through a lower region of the opening region.

7. The machine tool according to any one of claims 1 to 6, wherein the moving cover is opened and closed by a servomotor.

8. The machine tool according to claim 7, wherein an amount of the gas is determined based on a signal related to a position of the moving cover, the signal being transmitted to the servomotor by the control unit.

9. The machine tool according to any one of claims 1 to 8, further comprising a humidity sensor disposed in the machining chamber,
wherein the control unit changes an amount of the gas released from the blowout port according to humidity in the machining chamber detected by the humidity sensor.
